(19) Europäisches Patentamt / European Patent Office / Office européen des brevets

(11) **EP 4 351 946 B1**

(12) **FASCICULE DE BREVET EUROPEEN**

(45) Date de publication et mention de la délivrance du brevet:
**12.03.2025 Bulletin 2025/11**

(21) Numéro de dépôt: **22724818.4**

(22) Date de dépôt: **04.05.2022**

(51) Classification Internationale des Brevets (IPC):
**B60W 30/16** $^{(2020.01)}$ **B60W 30/18** $^{(2012.01)}$

(52) Classification Coopérative des Brevets (CPC):
**B60W 30/16;** B60W 30/18163; B60W 2420/403; B60W 2420/408; B60W 2552/53

(86) Numéro de dépôt international:
**PCT/FR2022/050860**

(87) Numéro de publication internationale:
**WO 2022/258900 (15.12.2022 Gazette 2022/50)**

(54) **PROCÉDÉ DE RÉGULATION DE VITESSE D'UN VÉHICULE CIRCULANT SUR UNE CHAUSSÉE À PARTIR D'UN VÉHICULE CIBLE**

VERFAHREN ZUR STEUERUNG DER GESCHWINDIGKEIT EINES AUF EINER STRASSE FAHRENDEN FAHRZEUGS AUF BASIS EINES ZIELFAHRZEUGS

METHOD FOR CONTROLLING THE SPEED OF A VEHICLE TRAVELLING ON A ROAD BASED ON A TARGET VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.06.2021 FR 2106019**

(43) Date de publication de la demande:
**17.04.2024 Bulletin 2024/16**

(73) Titulaire: **Stellantis Auto SAS
78300 Poissy (FR)**

(72) Inventeurs:
• **LAHLOU, Zoubida
  Casablanca, 20190 (MA)**
• **EL HANBALI, Hamza
  Casablanca, 20450 (MA)**
• **AIT ALI, Meriem
  Casablanca, 20580 (MA)**
• **ABOUESSIRE, Ismail
  Marrakech, 40160 (MA)**
• **ABOULISSANE, Badreddine
  Taroudant, 83350 (MA)**

(74) Mandataire: **ESIP
Stellantis
Service REIP
2-10, boulevard de l'Europe
78300 Poissy (FR)**

(56) Documents cités:
DE-A1- 19 637 245    US-A1- 2013 345 944
US-A1- 2017 123 430    US-A1- 2019 061 819

## Description

### Domaine technique

La présente invention concerne les procédés et dispositifs de régulation de vitesse d'un véhicule, notamment automobile, à partir d'un véhicule cible lorsque le véhicule change de voie de circulation.

### Arrière-plan technologique

Avec le développement du réseau routier et l'augmentation du nombre de voies de circulation, la sécurité routière devient un sujet de préoccupation important. En effet, avec le nombre de véhicules qui augmente sur le réseau routier, les risques de collisions augmentent, notamment sur des chaussées à plusieurs voies de circulation. Pour améliorer la sécurité routière, certains véhicules sont équipés de fonctions ou systèmes d'aide à la conduite, dit ADAS (de l'anglais « Advanced Driver-Assistance System »). Pour assurer le bon fonctionnement de ces systèmes d'aide à la conduite, une connaissance précise de l'environnement autour du véhicule est nécessaire.

L'un de ces systèmes ADAS couramment utilisés dans les véhicules est un régulateur de vitesse adaptatif ACC (de l'anglais « Adaptatif Cruise Control »). Un régulateur ACC est un équipement électronique qui accroît le confort et la sécurité des occupants et plus généralement des autres usagers, que l'on circule en agglomération, sur route ou autoroute. En plus des fonctions de régulation de vitesse classique, un régulateur ACC adapte la vitesse du véhicule en fonction du flux de véhicules présent devant lui. Pour cela, un capteur est installé à l'avant du véhicule pour surveiller le flux de véhicules présent devant lui. Si ce capteur détecte dans son champ d'action un véhicule cible circulant devant lui à plus faible allure, le régulateur ACC désactive la régulation de vitesse alors soumise à une vitesse de consigne, et réduit la vitesse du véhicule pour maintenir une distance de sécurité suffisante avec le véhicule cible. Au besoin, le régulateur ACC peut activer une commande de frein. Dans le cas où le véhicule cible change de voie de circulation ou accélère, le régulateur ACC peut augmenter la vitesse du véhicule jusqu'à atteindre la vitesse de consigne et peut activer la régulation de vitesse alors à nouveau soumise à cette vitesse de consigne.

On connait par le document US2013/345944 un procédé et un dispositif de génération d'un paramètre de commande pour un système d'assistance de distance d'un véhicule. On connait par le document US2017/123430, une sélection d'un véhicule cible sur le chemin lors du changement de voie d'un véhicule hôte. On connait par le document DE19637245, un procédé de régulation adaptative de la vitesse d'un véhicule. On connait par le document US2019/061819 un système et un procédé pour générer une trajectoire lors d'un changement de voie de circulation.Lorsqu'un véhicule, dont la vitesse est régulée par un régulateur ACC, change de voie de circulation, un problème de choix du véhicule cible peut se poser lorsque plusieurs véhicules précèdent ce véhicule : l'un circulant sur la voie de circulation sur laquelle le véhicule circule et un autre circulant sur la voie de circulation sur laquelle le véhicule va circuler une fois qu'il aura changé de voie de circulation. Sélectionner l'un de ces deux véhicules en tant que véhicule cible demandent des ressources calculatoires importantes qui vont au-delà des capacités des régulateurs ACC actuels.

Un problème est de sélectionner un véhicule cible pour la régulation de vitesse adaptative d'un véhicule lorsque ce véhicule est en train de changer de voie de circulation.

### Résumé de l'invention

Un objet de la présente invention est d'améliorer la connaissance de l'environnement d'un véhicule.

Un autre objet de la présente invention est d'améliorer la régulation de vitesse adaptative de véhicule.

Un autre objet de la présente invention est d'améliorer la sécurité routière.

Selon un premier aspect, la présente invention concerne un rocédé de régulation de vitesse, à partir d'un véhicule cible, d'un véhicule circulant sur une chaussée comprenant une première et une deuxième voies de circulation autorisant des véhicules à circuler dans un même sens. Le procédé est mis en œuvre par au moins un processeur, et comprend une étape d'obtention, à partir d'une caméra embarquée du véhicule, d'une représentation géométrique, exprimée dans un référentiel du véhicule, d'un centre de la première voie de circulation sur laquelle circule le véhicule ; une étape de détermination d'une représentation géométrique, exprimée dans le référentiel du véhicule, d'une ligne droite et d'une ligne gauche de la première voie de circulation, par translation, de la représentation géométrique du centre de la première voie de circulation, d'une valeur égale à une demi-largeur de la première voie de circulation ; une étape de détermination d'une représentation géométrique, exprimée dans le référentiel du véhicule, de la trajectoire d'un point central du véhicule ; une étape de détermination d'une représentation géométrique, exprimée dans le référentiel du véhicule, d'une première trajectoire d'un premier point du véhicule par translation négative d'une demi-largeur du véhicule, par rapport au référentiel du véhicule, de la représentation géométrique de la trajectoire du point central du véhicule ; une étape de détermination d'une représentation géométrique, exprimée dans le référentiel du véhicule, d'une deuxième trajectoire d'un deuxième point du véhicule par translation positive d'une demi-largeur du véhicule, par rapport au référentiel du véhicule, de la représentation géométrique de la trajectoire du point central du véhicule ; une étape de détermination d'une première intersection entre la représentation géométrique de la première trajectoire et la représentation géométrique de la ligne droite ou gauche ; une étape de détermination d'une deuxième intersection entre la représentation géométrique de la deuxième trajectoire et la représentation géométrique de la ligne droite ou gauche ; une étape de détermination d'une première distance de franchissement entre la première intersection et le premier point du véhicule et d'une deuxième distance de franchissement entre la deuxième intersection et un troisième point du véhicule ; et une étape de comparaison des première et deuxième distance de franchissement à des seuils et la vitesse du véhicule est régulée à partir d'un véhicule cible circulant sur la deuxième voie de circulation si au moins la première ou au moins la deuxième distance de franchissement est inférieure à un seuil.

Selon un exemple particulier et non limitatif, la représentation géométrique du centre de la voie de circulation dépend de marquages au sol détectés par la caméra.

Selon un exemple particulier et non limitatif, les représentations géométriques sont des polynômes.

Selon un exemple particulier et non limitatif, le point central du véhicule est confondu avec une origine du référentiel du véhicule.

Selon un exemple particulier et non limitatif, le premier point et le deuxième point sont situés sur l'avant du véhicule.

Selon un exemple particulier et non limitatif, le troisième point du véhicule est défini à partir du deuxième point et d'une longueur du véhicule.

Selon un deuxième aspect, la présente invention concerne un dispositif de régulation de vitesse d'un véhicule à partir d'un véhicule cible, le dispositif comprenant une mémoire associée à un processeur configuré pour la mise en œuvre des étapes du procédé selon le premier aspect de l'invention.

Selon un troisième aspect, la présente invention concerne un véhicule, par exemple de type automobile, comprenant un dispositif tel que décrit ci-dessus selon le deuxième aspect de l'invention.

Selon un quatrième aspect, la présente invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, l'invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

**Brève description des figures**

D'autres caractéristiques et avantages de l'invention ressortiront de la description des exemples de réalisation non limitatifs de l'invention ci-après, en référence aux figures 1 à 7 annexées, sur lesquelles :

[Fig. 1] illustre schématiquement un environnement routier pour la mise en œuvre d'un procédé de régulation de vitesse d'un véhicule à partir d'un véhicule cible, selon un exemple de réalisation particulier et non limitatif de la présente invention ;

[Fig. 2] illustre schématiquement l'obtention de lignes droite et gauche d'une voie de circulation, selon un exemple de réalisation particulier et non limitatif de la présente invention ;

[Fig. 3] illustre schématiquement un véhicule s'apprêtant à quitter une voie de circulation sur laquelle il circule pour aller vers une voie de circulation située sur sa droite, selon un exemple de réalisation particulier et non limitatif de la présente invention ;

[Fig. 4] illustre schématiquement la détermination d'une première distance de franchissement, selon un exemple de réalisation particulier et non limitatif de la présente invention ;

[Fig. 5] illustre schématiquement la détermination d'une deuxième distance de franchissement, selon un exemple de réalisation particulier et non limitatif de la présente invention ;

[Fig. 6] illustre schématiquement un dispositif configuré pour réguler la vitesse d'un véhicule à partir d'un véhicule cible de l'environnement routier de la figure 1, selon un exemple de réalisation particulier et non limitatif de la présente invention ; et

[Fig. 7] illustre un organigramme des différentes étapes d'un procédé de régulation de vitesse d'un véhicule à partir d'un véhicule cible de l'environnement routier de la figure 1, selon un exemple de réalisation particulier et non limitatif de la présente invention.

**Description des exemples de réalisation**

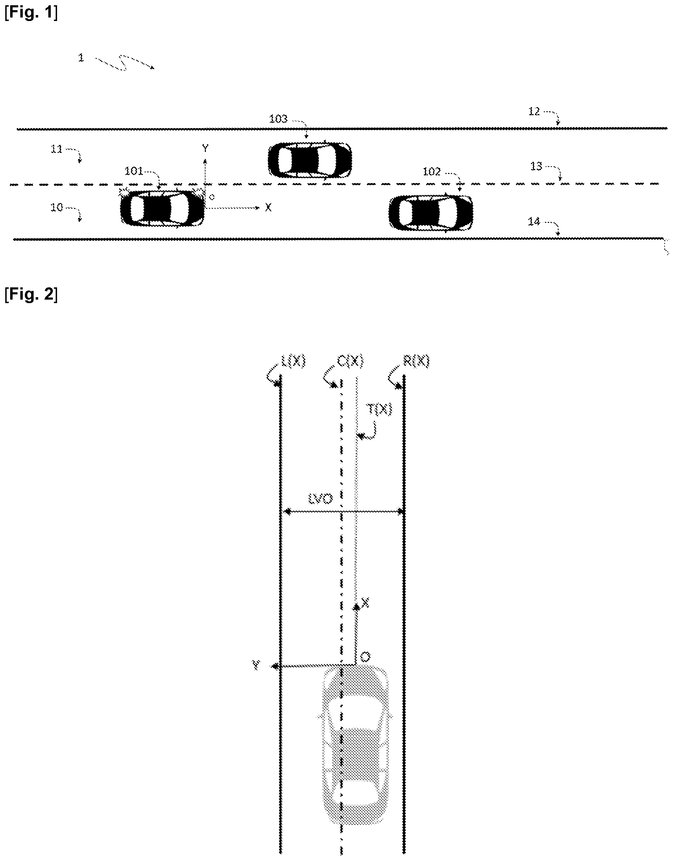

Un procédé et un dispositif de régulation de vitesse d'un véhicule à partir d'un véhicule cible vont maintenant être décrits dans ce qui va suivre en référence conjointement aux figures 1 à 7. Des mêmes éléments sont identifiés avec des mêmes signes de référence tout au long de la description qui va suivre.

Selon un exemple particulier et non limitatif de réalisation de l'invention, un procédé et dispositif de régulation de vitesse adaptatif d'un véhicule circulant sur une chaussée comprenant une première et une deuxième voies de circulation autorisant des véhicules à circuler dans un même sens, comprend l'obtention d'une représentation géométrique d'une ligne droite et d'une ligne gauche de la première voie de circulation, par translation, d'une représentation géométrique d'un centre de la première voie de circulation, d'une valeur égale à une demi-largeur de la première voie de circulation ; et la détermination d'une première et d'une deuxième distances de franchissement de la ligne droite ou de la ligne gauche de la chaussé par des points particuliers du véhicule ; la vitesse du véhicule est régulée à partir d'un véhicule cible circulant sur la deuxième voie de circulation si au moins la première ou au moins la deuxième distance de franchissement est inférieure à un seuil.

La comparaison des distances de franchissement d'une ligne délimitant la voie de circulation sur laquelle circule le véhicule par rapport à des seuils permet, d'une part, d'anticiper un changement de voie de circulation de ce véhicule et, d'autre part, de considérer que le véhicule a changé de voie de circulation. Cette anticipation du changement de voie de circulation du véhicule améliore les régulateurs ACC actuels car ces régulateurs peuvent alors lancer une détection de véhicule cible circulant sur la deuxième voie de circulation dès lors que le véhicule débute ce changement de voie de circulation. La durée de détection est ainsi allongée par rapport à une détection qui ne commencerait que lorsque le véhicule a effectivement changé de voie de circulation. L'une des deux distances de franchissement peut aussi indiquer que le changement de voie de circulation est en passe de se terminer. Cette indication peut aussi être utilisée, par exemple, par un régulateur ACC pour lui indiquer que le véhicule cible doit être absolument détecté dans la deuxième voie de circulation (et non plus dans la première) pour que la vitesse du véhicule soit régulée par rapport à ce véhicule cible détecté.

La comparaison de ces distances de franchissement de ligne par rapport à des seuils permet d'anticiper le positionnement du véhicule par rapport à la première et la deuxième voies de circulation et ainsi améliorer la sécurité routière car le véhicule peut ainsi anticiper d'éventuels obstacles lors du changement effectif de voies de circulation.

[Fig. 1] illustre schématiquement un environnement routier pour la mise en œuvre d'un procédé de régulation de vitesse d'un véhicule à partir d'un véhicule cible, selon un exemple de réalisation particulier et non limitatif de la présente invention.

La figure 1 illustre un environnement routier 1 comprenant par exemple une route à deux voies de circulation 10 et 11, c'est-à-dire avec deux voies de circulation selon un sens de circulation donné. L'environnement routier 1 correspond par exemple à une portion de voie rapide, par exemple une portion à 2 fois 2 voies de circulation (2 voies dans un sens et 2 voies dans l'autre sens).

Un véhicule 101 et un véhicule 102 circulent sur une première voie de circulation 10. Un véhicule 103 circule sur une deuxième voie de circulation 11.

La première voie de circulation 10 et la deuxième voie de circulation 11 sont matérialisées (délimitées) par des marquages au sol correspondant à des lignes tracées sur le sol. La première voie de circulation 10 est délimitée par une ligne de rive 14 et une ligne de séparation 13 et la deuxième voie de circulation 11 est délimitée par une ligne de rive 12 et la ligne de séparation 13. Les lignes 12, 13 et 14 sont avantageusement déterminées à partir de données obtenues par le véhicule 101. Ces données sont par exemple obtenues par un système de détection de marquage au sol embarqué dans le véhicule 101. Un tel système comprend une ou plusieurs caméras pour l'acquisition d'images de la route à l'avant et sur les côtés du véhicule 101. Un traitement d'image est appliqué à ces images pour déterminer la présence de lignes au sol et pour classifier ces lignes en différentes catégories, par exemple pour déterminer si les lignes au sol correspondent à des lignes de rive ou à des lignes de séparation de voies de circulation par exemple. Un exemple de traitement d'image pour détecter les lignes au sol est décrit dans le document WO2017194890A1.

Le véhicule 101 détecte un premier véhicule cible, en l'occurrence le véhicule 102, circulant dans la première voie de circulation 10. Un régulateur ACC embarqué dans le véhicule 101 régule alors la vitesse du véhicule 101 par rapport au véhicule 102.

Selon un exemple de réalisation particulier et non limitatif, le véhicule 101 comprend un système de détection d'objet(s) pour détecter les véhicules cible candidat situés sur l'avant du véhicule 101, en l'occurrence les véhicules 102 et 103. Un système de détection d'objet comprend par exemple des radars à ondes millimétriques disposés sur le véhicule 101, par exemple à l'avant, à l'arrière, sur chaque coin avant/arrière. Chaque radar est adapté pour émettre des ondes électromagnétiques et pour recevoir les échos de ces ondes renvoyées par un ou plusieurs objets, dans le but de détecter des obstacles et leurs distances vis-à-vis du véhicule 101 par exemple. Selon un autre exemple, un système de détection d'objet comprend un ou plusieurs LIDAR(s) (de l'anglais « Light Detection And Ranging », ou « Détection et estimation de la distance par la lumière » en français) et/ou une ou plusieurs caméras (associées ou non à un capteur de profondeur) pour détecter les objets dans l'environnement du véhicule 101, leur distance par rapport au véhicule 101 et éventuellement leur forme ou une partie de leur forme (par modélisation tridimensionnelle par exemple). Un véhicule cible est détecté lorsqu'une position d'un point situé sur ce véhicule cible est obtenu par le système de détection d'objets embarqué du véhicule 101.

Le clignotant du véhicule 101 est activé pour indiquer son intention de changer de voie de circulation, passant de la première voie de circulation 10 à la deuxième voie de circulation 11 située sur la gauche de la voie de circulation 10. La droite et la gauche sont définies par rapport au sens de circulation du véhicule 101.

La présente invention n'est pas limitée au changement de voie de circulation décrit à la figure 1 mais s'étend au changement de voie de circulation passant d'une première voie circulation vers une deuxième voie de circulation située sur la droite de la première voie de circulation.

Dans une première opération, une représentation géométrique C(x) d'un centre de la première voie de circulation 10 est obtenue à partir d'une caméra embarquée du véhicule 101. La représentation géométrique C(x) est exprimée dans un référentiel du véhicule 101.

Le référentiel du véhicule 101 peut, par exemple, être défini par un repère (O, X, Y) d'un plan parallèle à la chaussée dont l'axe X s'étend d'une origine O (point central du véhicule 101 situé par exemple au milieu et à l'avant du véhicule 101) selon la direction de circulation du véhicule 101, et l'axe Y s'étend de l'origine O selon une direction perpendiculaire à la direction de circulation du véhicule 101 (ici vers la gauche du véhicule 101).

Selon un exemple de réalisation particulier et non limitatif, la caméra capture une voire plusieurs images de l'environnement du véhicule 101 et un système de détection de marquage au sol est utilisé pour détecter la ligne de rive 14 et la ligne de séparation 13. La représentation géométrique C(x) représente alors le centre (milieu) de la voie de circulation 10 délimitée par la ligne de rive 14 et par la ligne de séparation 13 détectées. Le centre de la voie de circulation 10 est obtenu à partir des deux lignes détectées et, notamment, de la valeur de la demi-largeur entre ces deux lignes détectées.

Plusieurs positions successives du centre de la voie de circulation 10 sont obtenues lorsque le véhicule 101 circule selon l'axe X et la représentation géométrique C(x) représente alors ces positions successives.

Selon un exemple de réalisation particulier et non limitatif, la représentation géométrique C(x) est polynôme.

Selon un exemple de réalisation particulier et non limitatif, la représentation géométrique C(x) est un polynôme de degré 3 donné par $C(x) = C_3x^3 + C_2x^2 + C_1x + C_0$ avec $C_0$ un coefficient constant, $C_3$, $C_2$ et $C_1$ des coefficients du polynôme et (x,y) des coordonnées exprimées dans le référentiel du véhicule 101. Les coefficients $C_3$, $C_2$, $C_1$ et $C_0$ sont issus de la caméra embarquée du véhicule 101 ou du système de détection de marquage au sol utilisant des images issues de cette caméra.

Le coefficient $C_0$ représente une distance entre le centre du véhicule 101 et le centre de la voie de circulation 10. Le coefficient $C_1$ représente un angle entre la trajectoire du véhicule 101 et une tangente à la voie de circulation 10 (le cap). Le coefficient $C_2$ représente un rayon de courbure et le coefficient $C_3$ représente une dérivée de ce rayon de courbure.

Dans une deuxième opération, illustrée à la figure 2, une représentation géométrique L(x), exprimée dans le référentiel du véhicule 101, d'une ligne gauche de la première voie de circulation 10 est déterminée par translation positive (dans le sens croissant des ordonnées de l'axe Y) de la représentation géométrique C(x) d'une valeur égale à une demi-largeur (LVO/2) de la première voie de circulation 10. Une représentation géométrique R(x), exprimée dans le référentiel du véhicule 101, d'une ligne droite de la première voie de circulation 10 est déterminée par translation négative de la représentation géométrique C(x) d'une valeur égale à la demi-largeur LVO/2 de la première voie de circulation 10.

Selon un exemple de réalisation et non limitatif, les représentations L(x) et R(x) sont des polynômes.

Selon un exemple de réalisation et non limitatif, les représentations L(x) et R(x) sont des polynômes de degré 3 donnés par :

$$R(x) = C(x - N_x) + \frac{AL}{2}$$

$$L(x) = C(x + N_x) + \frac{AL}{2}$$

avec $N_x$ la projection sur l'axe X d'une normale $\vec{N}$ à la représentation géométrique C(x) donnée par :

$$\vec{N} = \left( \frac{1}{\sqrt{1+1/C'(x)^2}}, \frac{-1/C'(x)}{\sqrt{1+1/C'(x)^2}} \right)$$ dans laquelle $C'(x)$ est la dérivée de C(x) par rapport à X.

Dans une troisième opération, illustrée à la figure 2, une représentation géométrique T(x), exprimée dans le référentiel du véhicule 101, de la trajectoire d'un point central du véhicule 101 est déterminée.

Selon un exemple de réalisation particulier et non limitatif, le point central est l'origine O du référentiel du véhicule 101. Mais tout autre point du véhicule 101 peut être choisi sans pour cela limiter la portée de la présente invention.

Selon un exemple de réalisation particulier et non limitatif, la représentation géométrique T(x) est déterminée à partir de l'accélération latérale et la vitesse longitudinale du véhicule 101.

Selon un exemple de réalisation particulier et non limitatif, la représentation géométrique T(X) est déterminée par :

$$T(x) = A * x^2$$

avec $A = \frac{Alat}{2*V_x^2}$ dans laquelle *Alat* représente l'accélération latérale du véhicule 101 et $V_x$ la vitesse longitudinale du véhicule 101.

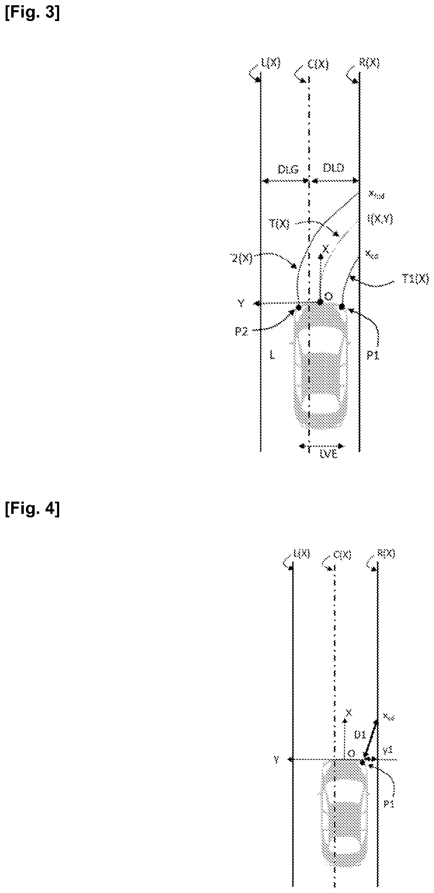

Dans une quatrième opération, illustrée à la figure 3, une représentation géométrique T1(x), exprimée dans le référentiel du véhicule 101, d'une première trajectoire d'un premier point P1 du véhicule 101 est déterminée par translation négative, par rapport au référentiel du véhicule 101, de la représentation géométrique T(x) d'une valeur égale à la demi-largeur LVE/2 du véhicule 101 : T1(x)=T(x)-LVE/2.

Dans une cinquième opération, illustrée à la figure 3, une représentation géométrique T2(x), exprimée dans le référentiel du véhicule 101, d'une deuxième trajectoire d'un deuxième point P2 du véhicule 101 est déterminée par translation positive, par rapport au référentiel du véhicule 101, de la représentation géométrique T(x) d'une valeur égale à la demi-largeur LVE/2 du véhicule 101 : T2(x)=T(x)+LVE/2.

Selon un exemple particulier et non limitatif, les points P1 et P2 sont situés sur l'avant du véhicule 101.

Dans une sixième opération, illustrée à la figure 4, une première intersection (point x_cd sur la figure 4) entre la représentation géométrique T1(x) et la représentation géométrique R(x) est déterminée.

En variante, la première intersection est déterminée entre la représentation géométrique T1(x) et la représentation géométrique L(x).

Le choix entre L(x) et R(x) pour déterminer la première intersection dépend de l'intention de changement de voie du véhicule 101.

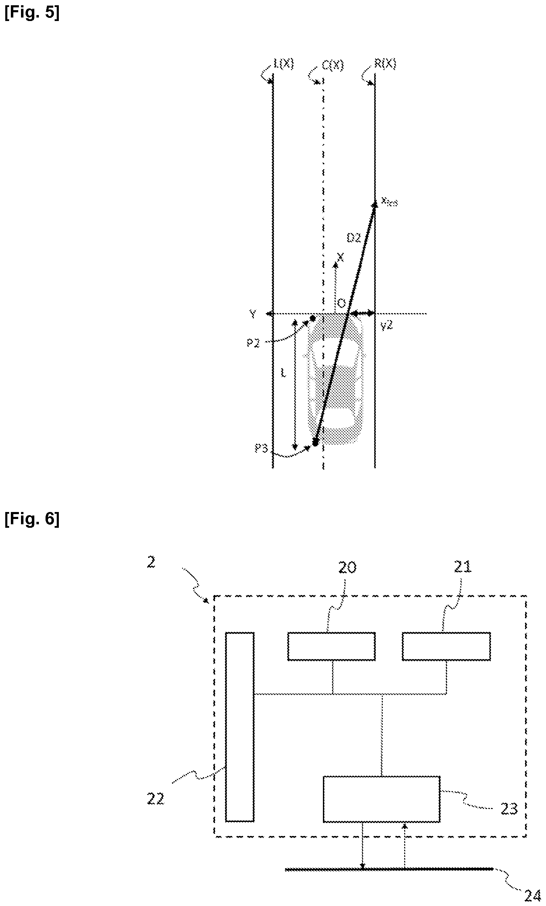

Dans une septième opération, illustrée à la figure 5, une deuxième intersection (point x_fcd sur la figure 5) entre la représentation géométrique T2(x) et la représentation géométrique R(x).

En variante, la deuxième intersection est déterminée entre la représentation géométrique T2(x) et la représentation géométrique L(x).

Le choix entre de la représentation géométrique L(x) ou R(x) pour déterminer la première intersection et la deuxième intersection dépend de l'intention de changement de voie du véhicule 101.

Selon un exemple de réalisation particulier et non limitatif, l'intention du véhicule 101 est exprimée par l'activation de clignotants gauches ou droits.

Selon l'exemple de la figure 4, la première intersection (point x_cd) est définie par : T(x_cd)-LVE/2=R(x_cd) et la deuxième intersection (point x_fcd) est définie par : T(x_fcd)+LVE/2=R(x_fcd) car l'intention du véhicule 101 est d'aller vers une voie de circulation située sur la droite de la voie de circulation 10. Si son intention est d'aller vers une voie de circulation située sur la gauche de la voie de circulation 10, la première intersection (point x_cd) est définie par : T(x_cd)+LVE/2=L(x_cd) et la deuxième intersection (point x_fcd) est définie par : T(x_fcd)-LVE/2=L(x_fcd).

Dans une huitième opération, une première distance de franchissement D1 entre la première intersection (point x_cd) et le point P1 du véhicule 101 est déterminée et une deuxième distance de franchissement D2 entre la deuxième intersection (point x_fcd) et un troisième point P3 du véhicule 101 est déterminée.

Selon un exemple de réalisation particulier et non limitatif, le troisième point P3 du véhicule 101 est défini à partir du deuxième point P2 et de la longueur L du véhicule 101.

Selon un exemple de réalisation particulier et non limitatif, illustré sur la figure 5, les points P2 et P3, exprimées dans le repère (O, X, Y) du véhicule 101 ont la même ordonnée y et la différence de leur abscisses x est égale à la longueur L du véhicule 101.

Cet exemple de réalisation est avantageux car il permet de déterminer une distance de franchissement D2 qui indique qu'un changement de voie de circulation est en passe de se terminer.

Selon un exemple de réalisation particulier et non limitatif, les distances de franchissement sont déterminées par :

$$D1^2 = y_1^2 + x_{cd}^2$$

$$D2^2 = y_1^2 + (x_{cd} + L)^2$$

Selon un exemple particulier et non limitatif, le point P1 est situé sur l'avant gauche et le point P3 sur l'arrière droite du véhicule 101 si l'intention de changement de voie de circulation du véhicule 101 est d'aller vers une deuxième voie de circulation située sur la gauche de la voie de circulation 10. Le point P1 est situé sur l'avant droite et le point P3 sur l'arrière gauche du véhicule 101 si l'intention de changement de voie de circulation du véhicule 101 est d'aller vers une deuxième voie de circulation située sur la droite de la voie de circulation 10 (figure 3).

Selon un exemple de réalisation particulier et non limitatif, le premier point P1 correspond à un point de l'une des deux roues avant du véhicule 101, le deuxième point P2 correspond à l'autre des deux roues avant du véhicule 101 et le troisième point P3 correspond à un point de l'une des deux roues arrière du véhicule 101.

Dans une neuvième opération, les distances de franchissement D1 et D2 sont comparées à des seuils TH1 et TH2 et la vitesse du véhicule 101 est régulée à partir d'un véhicule cible circulant sur la deuxième voie de circulation 11 si au moins la première ou au moins la deuxième distances de franchissement est inférieure à un seuil.

Par exemple, si D1<TH1 ou si D2<TH2 ou si D1<TH1 et si D2<TH2 alors la vitesse du véhicule 101 est régulée à partir d'un véhicule cible circulant sur la deuxième voie de circulation 11.

Selon un exemple particulier et non limitatif, les seuils TH1 et TH2 sont égaux à une même valeur.

[Fig. 6] illustre schématiquement un dispositif 2 configuré pour réguler la vitesse d'un véhicule 101 à partir d'un véhicule cible de l'environnement routier de la figure 1, selon un exemple de réalisation particulier et non limitatif de la présente invention.

Le dispositif 2 est embarqué dans le véhicule 101.

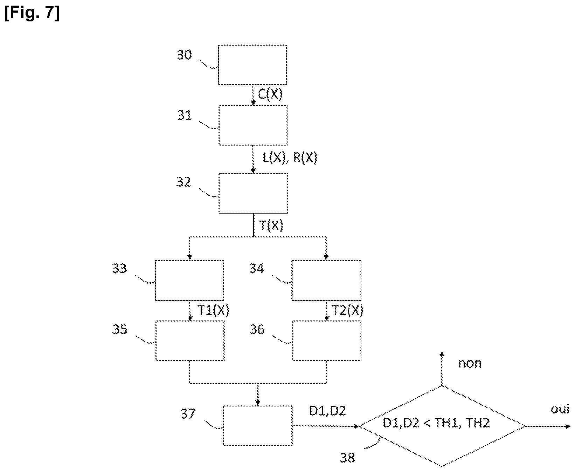

Le dispositif 2 est par exemple configuré pour la mise en œuvre des opérations décrites en regard des figures 1 à 5 et/ou des étapes du procédé décrit en regard de la figure 7. Des exemples d'un tel dispositif 2 comprennent, sans y être limités, un équipement électronique embarqué tel qu'un ordinateur de bord d'un véhicule, un calculateur électronique tel qu'une UCE (« Unité de Commande Electronique »), un téléphone intelligent (de l'anglais « smartphone »), une tablette, un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels. Selon différents exemples de réalisation particuliers, le dispositif 2 est couplé en communication avec d'autres dispositifs ou systèmes similaires, par exemple par l'intermédiaire d'un bus de communication ou au travers de ports d'entrée / sortie dédiés.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la première mémoire 21.

Selon un exemple de réalisation particulier et non limitatif, le dispositif 2 comprend un bloc 22 d'éléments d'interface pour communiquer avec des dispositifs externes, par exemple un serveur distant ou le « cloud », des capteurs embarqués, des dispositifs tels que radar ou caméra. Les éléments d'interface du bloc 22 comprennent une ou plusieurs des interfaces suivantes :

- interface radiofréquence RF, par exemple de type Bluetooth® ou Wi-Fi®, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 2 comprend une interface de communication 23 qui permet d'établir une communication avec d'autres dispositifs (tels que d'autres calculateurs du système embarqué lorsque le dispositif 2 correspond à un calculateur du système embarqué) via un canal de communication 24. L'interface de communication 23 correspond par exemple à un transmetteur configuré pour transmettre et recevoir des informations et/ou des données via le canal de communication 24. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay ou Ethernet.

Selon un exemple de réalisation particulier et non limitatif, le dispositif 2 peut fournir des signaux de sortie à un ou plusieurs dispositifs externes, tels qu'un écran d'affichage, un ou des haut-parleurs et/ou d'autres périphériques via respectivement des interfaces de sortie non représentées.

[Fig. 7] illustre un organigramme des différentes étapes d'un procédé de régulation de vitesse d'un véhicule à partir d'un véhicule cible de l'environnement routier de la figure 1, selon un exemple de réalisation particulier et non limitatif de la présente invention.

Le procédé est par exemple mis en œuvre par un dispositif 2 embarqué dans le véhicule 101.

Dans une première étape 30, une représentation géométrique C(x) d'un centre de la première voie de circulation 10 est obtenue à partir d'une caméra embarquée du véhicule 101. La représentation géométrique C(x) est exprimée dans un référentiel du véhicule 101.

Dans une deuxième étape 31, une représentation géométrique L(x), exprimée dans le référentiel du véhicule 101, d'une ligne gauche de la première voie de circulation 10 est déterminée par translation positive de la représentation géométrique C(x) d'une valeur égale à une demi-largeur de la première voie de circulation 10. Une représentation géométrique R(x), exprimée dans le référentiel du véhicule 101, d'une ligne droite de la première voie de circulation 10 est déterminée par translation négative de la représentation géométrique C(x) d'une valeur égale à la demi-largeur de la première voie de circulation 10.

Dans une troisième étape 32, une représentation géométrique T(x), exprimée dans le référentiel du véhicule 101, de la trajectoire d'un point central du véhicule 101 est déterminée.

Dans une quatrième étape 33, une représentation géométrique T1(x), exprimée dans le référentiel du véhicule 101, d'une première trajectoire d'un premier point du véhicule 101 est déterminée par translation négative, par rapport au référentiel du véhicule 101, de la représentation géométrique T(x) d'une valeur égale à la demi-largeur du véhicule 101.

Dans une cinquième étape 34, une représentation géométrique T2(x), exprimée dans le référentiel du véhicule 101, d'une deuxième trajectoire d'un deuxième point du véhicule 101 est déterminée par translation positive, par rapport au référentiel du véhicule 101, de la représentation géométrique T(x) d'une valeur égale à la demi-largeur du véhicule 101.

Dans une sixième étape 35, une première intersection entre la représentation géométrique T1(x) et la représentation géométrique R(x) est déterminée.

Dans une septième étape 36, une deuxième intersection entre la représentation géométrique T2(x) et la représentation géométrique R(x).

Dans une huitième étape 37, une première distance de franchissement D1 entre la première intersection et le premier point du véhicule 101 est déterminée, et une deuxième distance de franchissement D2 entre la deuxième intersection et un troisième point du véhicule 101 est déterminée.

Dans une neuvième étape 38, les distances de franchissement D1 et D2 sont comparées à des seuils et la vitesse du véhicule 101 est régulée à partir d'un véhicule cible circulant sur la deuxième voie de circulation 11 si au moins la première ou au moins la deuxième distances de franchissement est inférieure à un seuil.

Bien entendu, la présente invention ne se limite pas aux exemples de réalisation décrits ci-avant mais s'étend à un procédé de régulation de vitesse d'un véhicule à partir d'un véhicule cible qui inclurait des étapes secondaires sans pour cela sortir de la portée de la présente invention. Il en serait de même d'un dispositif configuré pour la mise en œuvre d'un tel procédé.

L'invention concerne également un véhicule 101, par exemple automobile ou plus généralement un véhicule à moteur, comprenant le dispositif 2 de la figure 7.

**Revendications**

1. Procédé de régulation de vitesse, à partir d'un véhicule cible, d'un véhicule (101) circulant sur une chaussée comprenant une première (10) et une deuxième (20) voies de circulation autorisant des véhicules (102, 103) à circuler dans un même sens, ledit procédé étant mis en œuvre par au moins un processeur, ledit procédé comprenant les étapes suivantes :

   - obtention (30), à partir d'une caméra embarquée du véhicule (101), d'une représentation géométrique (C(X)), exprimée dans un référentiel du véhicule, d'un centre de la première voie de circulation (10) sur laquelle circule le véhicule (101) ;
   - détermination (31) d'une représentation géométrique (L(X), R(X)), exprimée dans le référentiel du véhicule, d'une ligne droite et d'une ligne gauche de la première voie de circulation (10), par translation, de la représentation géométrique du centre de la première voie de circulation (10), d'une valeur égale à une demi-largeur de la première voie de circulation ;
   - détermination (32) d'une représentation géométrique (T(X)), exprimée dans le référentiel du véhicule, de la trajectoire d'un point central du véhicule ;
   - détermination (33) d'une représentation géométrique(T1(X)), exprimée dans le référentiel du véhicule, d'une première trajectoire d'un premier point du véhicule par translation négative d'une demi-largeur du véhicule, par rapport au référentiel du véhicule, de la représentation géométrique de la trajectoire du point central du véhicule ;
   - détermination (34) d'une représentation géométrique (T2(X)), exprimée dans le référentiel du véhicule, d'une deuxième trajectoire d'un deuxième point du véhicule par translation positive d'une demi-largeur du véhicule, par rapport au référentiel du véhicule, de la représentation géométrique de la trajectoire du point central du véhicule ;
   - détermination (35) d'une première intersection(X_cd) entre la représentation géométrique de la première trajectoire et la représentation géométrique de la ligne droite ou gauche ;
   - détermination (36) d'une deuxième intersection (X_fcd) entre la représentation géométrique de la deuxième trajectoire et la représentation géométrique de la ligne droite ou gauche ;
   - détermination (37) d'une première distance (D1) de franchissement entre la première intersection (x_cd)et le premier point (P1) du véhicule et d'une deuxième distance (D2) de franchissement entre la deuxième intersection (x_fcd) et un troisième point (P3) du véhicule ;
- comparaison (38) des première (D1) et deuxième (D2) distance de franchissement à des seuils et la vitesse du véhicule est régulée à partir d'un véhicule cible circulant sur la deuxième voie de circulation si au moins la première ou au moins la deuxième distance de franchissement est inférieure à un seuil.

2. Procédé selon la revendication 1, dans lequel la représentation géométrique du centre de la voie de circulation dépend de marquages au sol détectés par la caméra.

3. Procédé selon la revendication 1 ou 2, dans lequel les représentations géométriques sont des polynômes.

4. Procédé selon l'une des revendications précédentes, dans lequel le point central du véhicule est confondu avec une origine du référentiel du véhicule.

5. Procédé selon l'une des revendications précédentes, dans lequel le premier point (P1) et le deuxième point (P2) sont situés sur l'avant du véhicule.

6. Procédé selon l'une des revendications précédentes, dans lequel le troisième point (P3) du véhicule est défini à partir du deuxième point (P2) et d'une longueur du véhicule (L°.

7. Programme d'ordinateur comportant des instructions pour la mise en œuvre du procédé selon l'une quelconque des revendications précédentes, lorsque ces instructions sont exécutées par un processeur.

8. Support d'enregistrement lisible par un ordinateur sur lequel est enregistré un programme d'ordinateur comprenant des instructions pour l'exécution des étapes du procédé selon l'une des revendications 1 à 6.

9. Dispositif (2) de régulation de vitesse, à partir d'un véhicule cible, d'un véhicule circulant sur une chaussée, ledit dispositif (2) comprenant une mémoire (21) associée à au moins un processeur (20) configuré pour la mise en œuvre des étapes du procédé selon l'une quelconque des revendications 1 à 6.

10. Véhicule (101) comprenant le dispositif (2) selon la revendication 9.

**Patentansprüche**

1. Verfahren zum Steuern der Geschwindigkeit eines Fahrzeugs (101), das auf einer Straße von einem Zielfahrzeug aus fährt, wobei das Verfahren eine erste (10) und eine zweite (20) Fahrspur umfasst, die es Fahrzeugen (102, 103) ermöglichen, in der gleichen Richtung zu fahren, wobei das Verfahren durch mindestens einen Prozessor implementiert wird, wobei das Verfahren die folgenden Schritte umfasst:

- aus einer fahrzeugseitigen Kamera des Fahrzeugs (101) eine geometrische Darstellung (C(X)) einer Mitte der ersten Rollbahn (10), auf der sich das Fahrzeug (101) bewegt, in einem Bezugsrahmen des Fahrzeugs erhalten (30);
- Bestimmung (31) einer geometrischen Darstellung (L(X), R(X)), ausgedrückt im Bezugsrahmen des Fahrzeugs, einer geraden und einer linken Linie der ersten Rollbahn (10) durch Translation der geometrischen Darstellung des Mittelpunkts der ersten Rollbahn (10) um einen Wert gleich der halben Breite der ersten Rollbahn;
- Bestimmung (32) einer geometrischen Darstellung (T(X)), ausgedrückt im Bezugsrahmen des Fahrzeugs, der Flugbahn eines Mittelpunkts des Fahrzeugs;
- Bestimmung (33) einer geometrischen Darstellung (T1(X)), ausgedrückt in dem Fahrzeugrahmen, einer ersten Trajektorie eines ersten Punktes des Fahrzeugs durch negative Translation einer halben Breite des Fahrzeugs in Bezug auf den Fahrzeugrahmen der geometrischen Darstellung der Trajektorie des Mittelpunkts des Fahrzeugs;
- Bestimmung (34) einer geometrischen Darstellung (T2(X)), ausgedrückt in dem Fahrzeugrahmen, einer zweiten Trajektorie eines zweiten Punktes des Fahrzeugs durch positive Translation einer halben Breite des Fahrzeugs in Bezug auf den Fahrzeugrahmen der geometrischen Darstellung der Trajektorie des Mittelpunkts des Fahrzeugs;
- Bestimmung (35) eines ersten Schnittpunkts (Xcd) zwischen der geometrischen Darstellung der ersten Flugbahn und der geometrischen Darstellung der rechten oder linken Linie;
- Bestimmung (36) eines zweiten Schnittpunkts (Xfcd) zwischen der geometrischen Darstellung der zweiten Flugbahn und der geometrischen Darstellung der rechten oder linken Linie;
- Bestimmung (37) eines ersten Kreuzungsabstands (D1) zwischen der ersten Kreuzung (xcd) und dem ersten Punkt (P1) des Fahrzeugs und eines zweiten Kreuzungsabstands (D2) zwischen der zweiten Kreuzung (xfcd) und einem dritten Punkt (P3) des Fahrzeugs;
- Ein Vergleich (38) des ersten (D1) und des zweiten (D2) Kreuzungsabstandes zu Schwellen und der Fahrzeuggeschwindigkeit wird von einem auf der zweiten Rollbahn fahrenden Zielfahrzeug aus geregelt, wenn zumindest der erste oder zumindest der zweite Kreuzungsabstand unterhalb einer Schwelle liegt.

2. Verfahren nach Anspruch 1, bei dem die geometrische Darstellung der Mitte der Fahrspur von durch die Kamera erfassten Bodenmarkierungen abhängt.

3. Verfahren nach Anspruch 1 oder 2, bei dem die geometrischen Darstellungen Polynome sind.

4. Verfahren nach einem der vorhergehenden Ansprüche, bei dem der Mittelpunkt des Fahrzeugs mit einem Ursprung des Fahrzeug-Bezugssystems verwechselt wird.

5. Verfahren nach einem der vorhergehenden Ansprüche, bei dem sich der erste Punkt (P1) und der zweite Punkt (P2) an der Vorderseite des Fahrzeugs befinden.

6. Verfahren nach einem der vorhergehenden Ansprüche, bei dem der dritte Punkt (P3) des Fahrzeugs ausgehend von dem zweiten Punkt (P2) und einer Länge des Fahrzeugs (L°) definiert wird.

7. Computerprogramm mit Anweisungen zur Durchführung des Verfahrens nach einem der vorhergehenden Ansprüche, wenn diese Anweisungen von einem Prozessor ausgeführt werden.

8. Computerlesbares Aufzeichnungsmedium, auf dem ein Computerprogramm aufgezeichnet ist, das Befehle zum Ausführen der Schritte des Verfahrens nach einem der Ansprüche 1 bis 6 umfasst.

9. Vorrichtung (2) zur Geschwindigkeitsregelung eines auf einer Fahrbahn fahrenden Fahrzeugs von einem Zielfahrzeug aus, wobei die Vorrichtung (2) einen Speicher (21) umfasst, der mindestens einem Prozessor (20) zugeordnet ist, der zur Durchführung der Schritte des Verfahrens nach einem der Ansprüche 1 bis 6 konfiguriert ist.

10. Fahrzeug (101) mit der Vorrichtung (2) nach Anspruch 9.

**Claims**

1. A method of controlling the speed of a vehicle (101) traveling on a road from a target vehicle, the method comprising a first (10) and a second (20) traffic lanes allowing vehicles (102, 103) to travel in the same direction, the method being implemented by at least one processor, the method comprising the following steps:

   - obtaining (30), from an on-board camera of the vehicle (101), a geometric representation (C(X)), expressed in a reference frame of the vehicle, of a center of the first taxiway (10) on which the vehicle (101) is traveling;
   - determination (31) of a geometric representation (L(X), R(X)), expressed in the vehicle frame of reference, of a straight line and a left line of the first taxiway (10), by translation, of the geometric representation of the center of the first taxiway (10), by a value equal to half the width of the first taxiway;
   - determination (32) of a geometric representation (T(X)), expressed in the vehicle frame of reference, of the trajectory of a central point of the vehicle;
   - determination (33) of a geometric representation (T1(X)), expressed in the vehicle frame of reference, of a first trajectory of a first point of the vehicle by negative translation of a half-width of the vehicle, with respect to the vehicle frame of reference, of the geometric representation of the trajectory of the central point of the vehicle;
   - determination (34) of a geometric representation (T2(X)), expressed in the vehicle frame of reference, of a second trajectory of a second point of the vehicle by positive translation of a half-width of the vehicle, with respect to the vehicle frame of reference, of the geometric representation of the trajectory of the central point of the vehicle;
   - determination (35) of a first intersection (Xcd) between the geometric representation of the first trajectory and the geometric representation of the right or left line;
   - determination (36) of a second intersection (Xfcd) between the geometric representation of the second trajectory and the geometric representation of the right or left line;
   - determination (37) of a first crossing distance (D1) between the first intersection (xcd) and the first point (P1) of the vehicle and of a second crossing distance (D2) between the second intersection (xfcd) and a third point (P3) of the vehicle;
   - comparison (38) of the first (D1) and second (D2) crossing distance to thresholds and the vehicle speed is regulated from a target vehicle traveling on the second taxiway if at least the first or at least the second crossing distance is below a threshold.

2. The method according to claim 1, wherein the geometrical representation of the centre of the taxiway depends on markings on the ground detected by the camera.

**EP 4 351 946 B1**

3. Method according to claim 1 or 2, in which the geometric representations are polynomials.

4. The method according to claim 1, wherein the central point of the vehicle is coincident with an origin of the reference frame of the vehicle.

5. Method according to one of the preceding claims, in which the first point (P1) and the second point (P2) are situated on the front of the vehicle.

6. Method according to one of the preceding claims, in which the third point (P3) of the vehicle is defined from the second point (P2) and from a length of the vehicle (L°).

7. A computer program comprising instructions for implementing the method according to any one of the preceding claims, when these instructions are executed by a processor.

8. Computer-readable recording medium on which is recorded a computer program comprising instructions for executing the steps of the method according to one of claims 1 to 6.

9. Device (2) for regulating the speed, from a target vehicle, of a vehicle traveling on a road, the said device (2) comprising a memory (21) associated with at least one processor (20) configured for implementing the steps of the method according to any one of claims 1 to 6.

10. Vehicle (101) comprising the device (2) according to claim 9.

[Fig. 1]

[Fig. 2]

[Fig. 3]

[Fig. 4]

[Fig. 5]

[Fig. 6]

[Fig. 7]

# EP 4 351 946 B1

## RÉFÉRENCES CITÉES DANS LA DESCRIPTION

**Documents brevets cités dans la description**

- US 2013345944 A
- US 2017123430 A
- DE 19637245
- US 2019061819 A
- WO 2017194890 A1